(19) Europäisches Patentamt
European Patent Office
Office européen des brevets

(11) Veröffentlichungsnummer: **0 100 873**
**B1**

(12) # EUROPÄISCHE PATENTSCHRIFT

(45) Veröffentlichungstag der Patentschrift: **08.04.87**

(51) Int. Cl.[4]: **C 08 L 83/04**

(21) Anmeldenummer: **83106638.6**

(22) Anmeldetag: **07.07.83**

(54) **In der Wärme härtbare Organopolysiloxan-Massen.**

(30) Priorität: **20.07.82 DE 3227018**

(43) Veröffentlichungstag der Anmeldung: **22.02.84 Patentblatt 84/8**

(45) Bekanntmachung des Hinweises auf die Patenterteilung: **08.04.87 Patentblatt 87/15**

(84) Benannte Vertragsstaaten: **BE DE FR GB IT**

(56) Entgegenhaltungen:
**EP-A-0 037 226**
**FR-A-2 347 410**
**FR-A-2 453 197**
**US-A-4 329 275**

(73) Patentinhaber: **BAYER AG, Konzernverwaltung RP Patentabteilung, D-5090 Leverkusen 1 Bayerwerk (DE)**

(72) Erfinder: **Kniege, Wilfried, Alte Wipperfürther Strasse 80, D-5060 Bergisch Gladbach 2 (DE)**
Erfinder: **Michel, Werner, Dr., Hahnenweg 1, D-5000 Köln 80 (DE)**
Erfinder: **Ackermann, Jürgen, Dr., Starenweg 17, D-5060 Bergisch Gladbach 2 (DE)**
Erfinder: **Rudolph, Karl- Heinz, Dr., Morgengraben 6, D-5000 Köln 80 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



LIBER, STOCKHOLM 1987

**Beschreibung**

Die vorliegende Erfindung betrifft in der Wärme härtbare Organopolysiloxan-Massen, die ein neuartiges Inhibitorsystem enthalten.

Zu Elastomeren härtbare Organopolysiloxan-Massen sind bereits bekannt. Es handelt sich hierbei um Polymere und Polymergemische, welche vorwiegend auf Polydimethylsiloxanbasis beruhen und den Viskositätsbereich von wenigen mPas bis zu mehreren Millionen mPas überstreichen. Zur Vernetzung dieser Massen werden sowohl radikalische Reaktionen als auch Kondensations- und Additionsreaktionen verwendet. Beispiele sind das Erhitzen mit Peroxiden, das Zusammentreten von Silanogruppen mit Kieselsäureestern unter Abspaltung von Alkoholen sowie die edelmetallkatalysierte Anlagerung von Siliciumwasserstoff-Verbindungen an Alkenylsiloxane. Üblicherweise werden diesen Massen Füllstoffe beigefügt, die verstärkende und/oder verbilligende Wirkung haben.

Bezüglich des Anvulkanisationsverhaltens stellen mit Peroxid vulkanisierende Organopolysiloxanmassen einen optimalen Stand der Technik dar, wogegen die Additionsvernetzung eine Reihe von Schwierigkeiten in sich birgt, die im folgenden noch näher erläutert werden.

Die Erfindung ermöglicht die Herstellung von zu Elastomeren härtbaren additionsvernetzenden Massen, die folgende wertvolle Kombination von Eigenschaften aufweisen:

a) Gute Lagerfähigkeit bei Raumtemperatur

b) Hohe Sicherheit gegen vorzeitige Anvulkanisation (Scorch) bei erhöhten Temperaturen

c) Rasche Ausvulkanisation bei Vernetzungstemperatur

Als Edelmetallkatalysatoren eignen sich in erster Linie Verbindungen des Platin, Ruthenium, Rhodium, Palladium und Iridium. Die Metalle selbst, sofern sie in feinverteilter Form vorliegen, sind ebenfalls aktiv. Es sind daneben auch bestimmte Komplexverbindungen von Eisen, Kobalt und Nickel als Additionskatalysatoren beschrieben worden. Deren Eignung als Vernetzungskatalysator für Elastomere konnte bisher jedoch noch nicht in überzeugender Weise demonstriert werden. Aufzählungen von als Katalysator wirksamen Verbindungen finden sich in folgenden Patentschriften:

DE-AS 26 31 300, US-PS 3 453 234.

In der Vergangenheit wurden vielfach Vorschläge gemacht, welche auf eine Verbesserung der Lagerbeständigkeit von bereits mit Vernetzer versehenen zu Elastomeren additionsvernetzbaren Siliconmassen abzielten. Diese Vorschläge laufen darauf hinaus, den reaktiven Massen chemische Verbindungen zuzusetzen, welche die Aktivität der als Katalysator zugesetzten Edelmetallverbindungen hemmen. Diese oft als Inhibitor bezeichneten Stoffe sind so ausgewählt, daß ihre Hemmwirkung bei Temperaturen oberhalb Raumtemperatur allmählich durch die katalytische Aktivität des Edelmetalls überspielt wird. Somit kann man bei genügend hoch gewählter Temperatur aus der flüssigen bis plastischen Rohmasse ein vernetztes Elastomer erhalten.

Stabilisierungsmittel für diesen Zweck sind Amine oder Amidverbindungen, vgl. z.B. US-PS 3 188 299; Sulfide oder Sulfoxidverbindungen, vgl. z.B. US-PS 3 453 234; Phosphinverbindungen, vgl. z.B. US-PS 3 188 300; Schwermetalle enthaltende ionische Substanzen, vgl. z.B. US-PS 3 532 649, acetylenische Verbindungen, vgl. z.B. US-PS 3 445 420 und ethylenisch ungesättigte Cyanurate und Isocyanurate, z.B. DE-OS 24 54 257 sowie Mellithate, Citrate und Phosphate. Diese Stabilisierungsmittel enthaltene Organopolysiloxanzusammensetzungen verbreiten jedoch unangenehmen Geruch, verunreinigen die Arbeitsatmosphäre und verstärken Kriechströme in elektronischen Schaltungselementen, auf die sie aufgebracht wurden.

Die überwiegende Mehrzahl der bekannten Inhibitoren sind thermisch recht beständige Verbindungen und bei den zur Vernetzung angewandten Temperaturen stabil. Dies beinhaltet zwei prinzipielle Nachteile, die dem allgemeinen Wunsch nach einer möglichst effizienten Vernetzung entgegenstehen: a) Die Inhibitoren bleiben im gehärteten Produkt eingeschlossen und können zur Beeinträchtigung erwünschter Eigenschaften - wie z.B. optische Reinheit, Geruch, physiologische Unbedenklichkeit - führen.

b) Falls eine nachträgliche Entfernung solcher unerwünschter Beimengungen überhaupt möglich ist, erfordert dies u.U. langwierige Nachbehandlungen - z.B. Lagerung in Heißluft oder Waschprozesse -, unter denen die Wirtschaftlichkeit der Herstellungsverfahren stark leiden kann.

c) Die Inhibitoren behalten auch bei Vulkanisationstemperatur ihre Wirksamkeit und verringern die Effizienz der Vernetzung.

Die in der Praxis ausgeübte Peroxid-Vernetzung zeichnet sich in vorteilhafter Weise dadurch aus, daß bei normalen Umgebungstemperaturen kein vorzeitiges Anvulkanisieren der vernetzerhaltigen Massen zu befürchten ist. Eine Anvulkanisation tritt in der Regel erst ein bei Temperaturen, die ca. 50°C unterhalb der Temperatur liegen, bei welcher das Peroxid eine Halbwertzeit von einer Minute hat. Die verwendeten Peroxide gewährleisten Lagerfähigkeiten von vielen Monaten bei Temperaturen um 20°C sowie ausgezeichnetes Fließen der Massen während des Formgebungsprozesses. Beispiele hierfür sind die Extrusion in Schneckenmaschinen oder Kolbenextrudern, wo Temperaturen bis zu 80°C toleriert werden können, aber auch das Fließen in den Einspritzkanälen von Metallformen, wie sie in der Gummiindustrie in üblicher Weise verwendet werden.

Diese Formen sind bis auf Vulkanisationstemperatur vorgeheizt, und man erwartet von der einfließenden Elastomermischung, daß sie alle Nester der Form vollständig ohne Blasen und Lunker füllt. Zu diesem Zweck ist eine langsame Anvulkanisation, verbunden mit einer schnellen Ausvulkanisation erwünscht, wie sie in der Regel von Peroxiden geliefert wird.

Als für die Vernetzung von Siliconmassen geeignete Peroxide haben sich erwiesen das 2,4-Dichlorbenzoylperoxid und das o-Chlorbenzoylperoxid für die drucklose Vernetzung in Heißluft mit Hilfe infraroter Strahlung. Für die Vernetzung unter Druck haben sich bewährt beispielsweise Dibenzoyl-peroxid, Bis-(4-chlorbenzoyl)peroxid, 1,1-Bis-(t-butyl-peroxy)-3, 3,5-trimethylcyclohexan, 2,2-Bis-(t-butylperoxy)butan, t-Butylperbenzoat, Dicumylperoxid, Bis-(t-butylperoxy-iso-propyl)benzol, Di-t-butylperoxid.

Als nachteilig bei der Peroxidvernetzung erweist sich in vielen Fällen der starke, lange anhaftende Geruch der Peroxidspaltprodukte. Bei einigen Peroxiden blühen kristalline Spaltprodukte auf der Oberfläche der fertigen Produkte aus und machen diese dadurch unansehnlich oder für den beabsichtigten Anwendungszweck unbrauchbar. Aus diesem Grunde führt man im Anschluß an die Vernetzung noch eine Nachbehandlung der fertigen Gummiteile in heißer Luft durch, wobei die unerwünschten Bestandteile verdampft werden.

Neben einem hohen zusätzlichen Energieaufwand bedeutet diese zusätzliche Maßnahme auch eine Belastung der Abluft. Obwohl die größte Masse der in der Hitze vulkanisierenden Siliconelastomere mit Peroxiden vernetzt wird, versucht man die spezifischen oben erwähnten Nachteile dieses Verfahrens zu umgehen, indem man Anstrengungen unternimmt, die edelmetallkatalysierte Si-H-Additionsvernetzung den Erfordernissen der Praxis anzupassen. Dies betrifft insbesondere folgende Punkte: Verhinderung der Anvulkanisation bei Raumtemperatur, Verbesserung des Fließverhaltens bei erhöhten Temperaturen, Verlängerung der Fließwege in der Form.

Es sind bereits Methoden bekannt, die Lagerung bei Raumtemperatur zu ermöglichen, ohne daß der Vernetzungsgrad des Materials soweit ansteigt, daß plastisches Fließen der Rohmasse behindert wird.

Diese Methoden bestehen darin, daß der Masse neben dem Edelmetallkatalysator bestimmte chemische Verbindungen zugesetzt werden, die eine Inhibitorwirkung bezüglich der Vernetzung enthalten. Solche Verbindungen sind in der bereits erwähnten Literatur angegeben.

Diese Verbindungen lassen sich in bestimmte Stoffklassen einteilen:

a) solche, die mit dem Edelmetall Komplexe bilden können,

b) solche, die nicht vordergründig als Komplexbildner bekannt sind.

Die Mehrzahl aller beschriebenen Inhibitoren gehört in die Klasse a).

Hierin findet man

Phosphine

Stickstoffhaltige Verbindungen

Alkene

Alkine

Thioverbindungen (Mercaptobenzimidazol)

In die zweite Klasse fallen Stoffe, welche im Sinne einer anderweitigen Hemmung in die Vernetzungsreaktion eingreifen können, z.B. Hydroperoxide.

Aus der Vielzahl der beschriebenen Inhibitoren konnten sich in der Praxis nur wenige durchsetzen, da zahlreiche der in Frage kommenden Verbindungen teuer sind und durch üblen Geruch, geringe chemische Stabilität oder schwere Zugänglichkeit gekennzeichnet sind. Nicht selten führen sie zu unerwünschten Verfärbungen des Kautschuks und mindern durch ihre andersartige chemische Natur das typische Eigenschaftsbild der Silicone (Temperaturbeständigkeit, Antiadhäsivität, physiologische Indifferenz, Farbstabilität).

Die besonders wirksamen Inhibitoren sind aufgrund ihrer Toxizität schwierig zu handhaben, weniger wirksame Inhibitoren, wie z.B. Triallylcyanurat oder Tetravinyltetramethylcyclotetrasiloxan müssen in verhältnismäßig großen Mengen zugesetzt werden, wodurch die oben erwähnten Nachteile zum Tragen kommen.

Die Erfahrung hat gelehrt, daß die Inhibitorwirkung nicht nur auf niedrige Temperaturen beschränkt ist, sondern auch dort auftritt, wo sie nicht mehr erwünscht ist, nämlich bei Vernetzungstemperatur. Hierauf ist die Beobachtung zurückzuführen, daß besonders stark wirkende Inhibitoren oder hohe Dosierungen derselben die Ausvulkanisation der betreffenden Elastomere verzögern.

Ein anerkanntes Instrument zur Verfolgung des Vulkanisationsverhaltens von Kautschukmischungen ist das Vulkameter. Solche Geräte existieren in verschiedenen handelsüblichen Ausführungsformen. Der Vernetzungsvorgang wird über das Anwachsen des Widerstandes gegen mechanische Verformung messend verfolgt.

Peroxidvernetzte Systeme zeigen nach einer gewissen Inkubationszeit einen steilen Anstieg des Verformungswiderstandes. In der Darstellung als zeitliches Diagramm erhält man einen stufenförmigen Verlauf der sorgenannten Vulkanisationskurve. Diese Kurven kommen der idealen Form bereits recht nahe.

Additionssysteme zeichnen sich dadurch aus, daß bereits vor der Hauptvulkanisation ein allmählicher Anstieg des Verformungswiderstandes zu beobachten ist und die Hauptreaktion an Steilheit die des Peroxids nicht immer erreicht.

Ziel der vorliegenden Erfindung ist eine additionsvernetzende Siliconkautschuk-Mischung, bestehend aus den üblichen Polymeren, Füllstoffen und Zusatzstoffen, die dadurch gekennzeichnet ist, daß man ein neuartiges Inhibitorsystem zugibt.

Es wurde nämlich gefunden, daß bei gemeinsamer Verwendung bekannter Inhibitoren zusammen mit kleinen Mengen Peroxidden, eine äußerst wirksame Inhibierung möglich ist.

Das Peroxid und der bekannte Inhibitor wirken dabei im Sinne eines Synergismus.

Gegenstand der vorliegenden Erfindung ist mithin eine in der Wärme vulkanisierende

Polysiloxankautschukmischung bestehend aus

a) einem ungesättigte Gruppen aufweisenden Polyorganosiloxan,

b) Si-H-Gruppen-haltigen Verbindungen,

c) Füllstoffen,

d) Additionskatalysatoren sowie gegebenenfalls weitere Hilfsstoffen bzw. Verarbeitungshilfsmitteln, dadurch gekennzeichnet, daß diese Mischungen zusätzlich ein Inhibitorsystem e), bestehend aus einem organischen Peroxid und Triallylcyanurat, Triallylcitrat und/oder N,N'-bis-(trimethylsilyl)-harnstoff enthalten.

Als Ausgangsmaterialien werden eingesetzt:

1) Polymer, ausgewählt aus linearen oder verzweigten Polyorganosiloxanen vom Typ

$R_1R_2R_3SiO$ -$[(CH_3)_2\ SiO]_n$ -$[R_1CH_3SiO]_m$ -$[R_2R_3SiO]_p$ -Si $R_1R_2R_3$,

wobei $R_1$ ausgewählt sein kann aus Methyl, Vinyl oder Allyl,

und $R_2$ Methyl, Fluoralkyl, Chlormethyl oder Phenyl bedeuten kann

und $R_3$ Methyl, Phenyl, Alkyl mit 2 bis 20 C-Atomen sowie Polymerisate aus Vinylmonomeren, die durch radikalische Pfropfungsreaktionen entstehen, bedeuten kann,

und $R_4$ Vinyl oder Allyl bedeuten kann, n ist hierbei eine Zahl von 50 bis 10 000 vorzugsweise eine Zahl von 100 bis 8000, m ist eine Zahl von 0 bis 100, mit der Maßgabe, daß mindestens zwei Alkenylgruppen in der Kette enthalten sein müssen, und p eine Zahl von 0 bis 2000.

2) Verstärkender Füllstoff wie zum Beispiel pyrogen erzeugtes Siliziumdioxid mit spezifischer Oberfläche von 50 bis 400 $m^2/g$, gemessen nach der BET-Methode, pyrogen erzeugtem Titandioxid mit spezifischer Oberfläche von 20 bis 100 $m^2/g$ sowie pyrogen hergestellten Mischoxiden aus Titandioxid und Kieselsäure mit Oberflächen von 50 bis 400 $m^2/g$. Ferner oberflächenreiche Füllstoffe vom Typus der gefällten Kieselsäure mit Oberflächen von 50 bis 1000 $m^2/g$ sowie gefälltes Titandioxid mit Oberflächen von 50 bis 400 $m^2/g$.

Die verstärkenden Füllstoffe können entsprechend dem Stand der Technik oberflächenmodifiziert sein durch Behandlung mit organofunktionellen Silanen, Siloxanen bzw. Silazanen.

3) Nicht verstärkende Füllstoffe, beispielsweise gemahlener oder natürlicher feinteiliger Quarz, gefällte oder natürliche Kreide, Aluminiumoxid, Aluminiumoxidhydrat, Glimmermehl, Talkum, gemahlener Dolomit, natürliche oder synthetische Aluminiumsilicate, Metallpulver und Metalloxide in Pulverform sowie Glaspulver, Borcarbid und Pigmente, soweit sie nicht die Additionsvernetzung behindern.

4) Zusätze wie Hitzestabilisatoren, flammhemmende Mittel, Reversionsstabilisatoren, weichmachende Zusätze sowie Mittel zur Verbesserung der Kalandrierbarkeit.

5) Vernetzer ausgewählt aus der Klasse der Siliciumwasserstoffverbindungen der allgemeinen Formel:

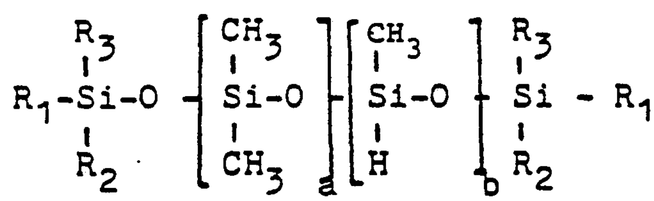

worin $R_1$ Methyl, Phenyl, Vinyl oder Wasserstoff bedeuten kann, $R_2$ ausgewählt sein kann aus Methyl, Phenyl, gesättigte aliphatische Kohlenwasserstoffreste mit 2 bis 20 Kohlenstoffatomen, und $R_3$ Methyl, Phenyl, Polyoxyalkylen, Alkyl mit 2 bis 20 Kohlenstoffatomen sowie Polymerisate aus Vinylmonomeren, die durch radikalische Pfropfungsreaktionen (wie sie z. B. gemäß der europ. Patentanmeldungen 31 887, 29 948 und 29 947) entstehen, bedeuten kann.

a bedeutet eine Zahl zwischen 0 und 2000, vorzugsweise eine Zahl zwischen 0 und 500,

b bedeutet eine Zahl zwischen 0 und 2000, vorzugsweise eine Zahl zwischen 1 und 50. Es muß Sorge getragen werden, daß im Molekül mindestens zwei Wasserstoffatome vorhanden sind.

6) Ein Additionskatalysator in einer Menge von wenigstens 0,1 Gew.-Teilen Platin pro Million Gew.-Teilen des Gesamtgewichtes aus den Bestandteilen 1), 2) und 5).

Als Platinverbindung läßt sich irgendeine bekannte derartige Verbindungsart verwenden, wie Platin selbst, auf Träger, wie Silicagel oder Kohlepulver abgelagertes Platin, Platinchlorid, Salze von Platin oder Chloroplatinsäure.

Eine bevorzugte Platinform ist ein Tetravinyl-tetramethylcyclotetrasiloxankomplex. Eine weitere bevorzugte Platinform ist die Chloroplatinsäure, und zwar entweder in ihrer handelsüblichen Hexahydratform oder der wasserfreien Form, gelöst in Alkohol, da sich diese Verbindung leicht in Organosiliciumsystemen dispergieren läßt und die Farbe des Gemisches nicht beeinflußt. Weitere Platinverbindungen sind beispielsweise $PtCl_2[P(CH_2CH_2CH_3)_3]_2$, Platinbromid, Komplexe aus Platinhalogenid und einem Olefin, wie Ethylen, Propylen, Butylen, Cyclohexen oder Styrol, $Pt(CH_3CN)_2Cl_2$, $[Pt(CH_3CN)_2(CH_3)_4Cl_2$, $Pt(NH_3)_2Cl_2$, $K[PtCl_3CH_2CH_2OH]$, $PtBr_2(C_2H_4)_2$, $K[PtBr_3(C_2H_4)]$, $PtCl_2(C_2H_4)$, $(CH_3)_2C{=}CH_2$, $PtCl_2$, $H_2Pt(CN)_4.5H_2O$, $H[PtCl_3(CH_3CN)]$, $Pt(NH_3)_2(CNS)_2$, $PtCl_2.PCl_3$, $[Pt(NH_3)_4]$. $[PtCl_4]$, $PtCl_2P(CH_2CH_3)_3$, $PtCl_2.P(OH)_3$, $PtCl_2.P(OCH_2CH_3)_3$, $PtCl_2.[P(OCH_2CH_3)_3]_2$, $Pt(OOCH_2SCH_2CH_3)_2$, $Pt(CN)_3$, $(CH_3)_4Pt$,

$(CH_3)_3Pt$-$Pt(CH_3)_3$, $(CH_3)_3Pt(CH_3COOCH$

FIG2/15

$PtCl_2CO$ oder $PtBr_2Co$.

Pro Million Gew.-Teile des Gesamtgewichtes aus 1, 2 und 5 sollte wenigstens 0,1 Gew.-Teil Platin vorhanden sein. Da diese geringe Katalysatormenge jedoch leicht durch im System vorhandene Verunreinigungen vergiftet werden kann, werden vorzugsweise 1 bis 20 ppm Platin eingesetzt. Man kann auch mit einer größeren Platinmenge arbeiten. Wirtschaftliche Überlegungen sprechen jedoch eher für den Einsatz der angeführten geringeren Katalysatormenge.

7) Ein Inhibitorsystem, ausgewählt aus a) den oben aufgeführten bekannten Verbindungen. Insbesondere werden die nichttoxischen, geruchsarmen Inhibitoren aus der Klasse der olefinisch ungesättigten Verbindungen und der Amide bevorzugt. Es können auch Mischungen zweier oder mehrerer dieser bekannten Inhibitoren verwendet werden. Die benötigte Gesamtmenge an Inhibitoren dieser Art ist nach dem hier beanspruchten Verfahren wesentlich geringer als die nach den bekannten Verfahren zur Erzielung des gleichen Effektes notwendige Menge. Das Gewichtsverhältnis von komplexbildendem Inhibitor zu Platin, gerechnet als Metall, kann bis zu 100 betragen. Bevorzugt wird ein Verhältnis von 10 bis 50. Sehr gute Ergebnisse erhält man mit Triallylcyanurat, welches ungiftig, lagerbeständig, leicht erhältlich und preiswert ist. Triallylisocyanurat liefert die gleichen Ergebnisse, ist aber bedeutend teurer. Triallylcitrat ist ebenfalls wirksam und damit hergestellte Massen können vielen Ansprüchen der Praxis gerecht werden, insbesondere bei Verwendung in Zweikomponenten-Flüssigsilikonkautschukmassen, wo eine Lagerstabilität der vermischten Komponenten von wenigen Tagen völlig ausreichend ist.

Als Vertreter der Gruppe von Ligandenbildnern, welche nicht nach dem Typ der Olefine π-Komplexe bilden, sondern deren Donoreigenschaften auf dem Vorhandensein von freien Elektronenpaaren beruhen, ist N,N'-Bis(trimethylsilyl)-harnstoff zu nennen. Diese Verbindung eignet sich besonders gut wegen ihrer chemischen und toxikologischen Neutralität und ist leicht herstellbar. Die Beispiele zeigen, daß bei gemeinsamer Verwendung mit kleinen Mengen Peroxid eine stark inhibierende Wirkung auftritt, wogegen die Substanz allein nur einen schwachen Inhibitor darstellt.

b) einem organischen Peroxid, wie es für die Vernetzung von Siliconkautschuk üblicherweise verwendet wird, bzw. Abmischungen solcher Peroxide. Die benötigte Menge an Peroxid ist niedriger als bei der üblichen Peroxidvernetzung. Das Gewichtsverhältnis Peroxid zu Platin ist niedriger als 250, vorzugsweise 50 bis 150. Zur Erzielung guter Lagerbeständigkeit der Kautschukmischung bei Raumtemperatur werden solche Peroxide bevorzugt, die bei niedrigen Temperaturen eine ausreichend hohe Zerfallgeschwindigkeit besitzen, jedoch nicht so schnell zerfallen, daß sie noch innerhalb der gewünschten Lagerzeit zersetzt sind. Zur Verbesserung der Lagerbeständigkeit von hochviskosen Siliconkautschukmischungen bzw. zur Verlängerung der Tropfzeit von flüssigen Silikonkautschukmischungen haben sich substituierte Di-Benzoylperoxide als besonders geeignet erwiesen. Außer dem kommerziell leicht erhältlichen Bis-(2,4-dichlorbenzoyl)peroxid, eignet sich auch Bis-(orthochlorbenzoyl)peroxid. Peroxide mit höherer Zersetzungstemperatur, wie z. B. Tertiärbutylperbenzoat oder Dicumylperoxid weisen bei Raumtemperatur nur eine geringe Wirksamkeit auf. Allerdings beeinflussen sie bei höheren Temperaturen das Anvulkanisationsverhalten im Sinne eines günstigen sog. Scorch. Zusätzlich verbessern sie die Ausvulkanisation.

8) Verarbeitungshilfsmittel wie beispielsweise alphaomega-hydroxylgruppenhaltige Dimethylsiloxane, vinylmethylgruppenhaltige hydroxylgruppenterminierte Polysiloxane, phenyl- und methylgruppenhaltige hydroxylgruppenterminierte Polysiloxane, phenyl-, methylund vinylgruppenhaltige hydroxylgruppenterminierte Polysiloxane, Diarylsilandiole, Polysilazane, Hexamethyldisilazan, 1,3-Divinyl-1,1,3,3-tetra-methyldisilazan.

Die Herstellung dieser Mischungen kann erfolgen auf den für pastöse Stoffe im Handel angebotenen Mischaggregaten. Hierzu gehören schnellaufende Rührer, z.B. Dissolver, Dreiwalzenmischaggregate, Schneckenmischer, Planetenmischwerke, Zweiwalzenstühle, Schaufelkneter mit und ohne Stempel. Die Reihenfolge der Zugabe der einzelnen Komponenten kann beliebig erfolgen und liegt im Ermessen des Fachmannes.

Die erfindungsgemäßen Massen eignen sich z.B. hervorragend zur Herstellung technischer Gummiformteile, nach den in der Gummiindustrie üblichen Verarbeitungsverfahren wie z.B. Injection molding, Transfer molding und Compression molding, ferner für kontinuierliche drucklose Vulkanisation mittels IR-Strahlung, Wärmeträgerflüssigkeiten oder Heißluft sowie auch für Druckvulkanisation in Dampf oder Stickstoffgas als Wärmeträger.

Die beschriebenen Mischeinrichtungen sind vorzugsweise mit Anschlüssen für Schutzgas und Vakuum ausgestattet sowie mit Heiz- und Kühleinrichtungen versehen, um den Mischvorgang bei den gewünschten Temperaturen ablaufen zu lassen. Die Erfindung wird durch die nachfolgenden Beispiele näher erläutert, ohne sie in ihrem Umfang einzuschränken. (Die Angaben "%" und "Teile" bedeutet, soweit nichts anderes vermerkt ist "Gew.-%" bzw. "Gew.-Teile").

**Beispiel 1**

Es wird auf einem Gummimischwerk eine Siliconkautschukvormischung hergestellt, indem man in der üblichen Weise zu 100 Teilen eines vinylgruppenhaltigen Polydimethylsiloxanes mit 0,175 % Vinylgruppen, gerechnet als Vinylmethylsiloxyeinheiten, 40 Teile einer pyrogen erzeugten Kieselsäure mit einer Oberfläche von 200 $m^2/g$, 2 Teile pyrogenes Titandioxid mit einer Oberfläche von 50 $m^2/g$, 5,4 Teile eines Verarbeitungshilfsmittels vom Typ der vinylgruppenhaltigen, hydroxylgruppenterminierten Polydimethylsiloxane mit 5 % Vinylgehalt, gerechnet als Vinylmethylsiloxyeinheit sowie 0,5 Teile Hexamethyldisilazan miteinander vermischt. Dazu werden 10 ppm Platin in Form eines siliconlöslichen Tetravinyl-tetramethylcyclotetrasiloxan-Platinkomplexes gegeben. Die so erhaltene Vormischung wird als Grundmischung der Beispiele 2 bis 19 verwendet.

**Beispiel 2**

Zu 143 Teilen der Grundmischung nach Beispiel 1 mischt man mit Hilfe eines auf 20°C temperierten Zweiwalzenstuhles 1,5 Teile eines Si-H-gruppenhaltigen Polydimethylsiloxanes mit 33 % Methylhydrogensiloxyeinheiten und einer Viskosität von 20 m Pa.s. Die Mischung wird in 3 Teile geteilt. Ein Teil wird bei Raumtemperatur gelagert und nach 24 Stunden das Replastizierverhalten auf dem Zweiwalzenstuhl überprüft. Es zeigt sich, daß die Mischung so weit durchvernetzt ist, daß ein Weichwalzen nicht mehr möglich ist, vielmehr wird das Kautschukfell durch die Scherkraft des Mischaggregates zu Pulver zermahlen.

Der zweite Teil der Mischung wird in die Probenkammer eines Vulkameters gebracht und mit einer Aufheizrate von 5°C pro Minute bis auf 200°C erwärmt. Das Vulkameter zeichnet den Fortgang der Vernetzungsraktion in Form einer Schubmodulkurve auf.

Der dritte Teil der Mischung wird entsprechend den DIN-Vorschriften zur Prüfung von Gummiwerkstoffen zunächst zu Platten vulkanisiert, wobei abweichend von den DIN-Vorschriften die Herstellung der Rohlinge und die Vulkanisation sofort nach der Mischungsherstellung erfolgt. Aus den vulkanisierten und 6 Stunden bei 200°C in Heißluft nachgetemperten Platten werden Probekörper ausgeschnitten, die zur Ermittlung folgender Prüfgrößen dienen: Härte nach Shore A, Zugfestigkeit, Bruchdehnung und Rückprallelastizität.

**Beispiel 3**

Zu 143 Teilen der Grundmischung nach Beispiel 1 mischt man mit Hilfe eines auf 20°C temperierten Zweiwalzenstuhles 1,5 Teile eines Si-H-gruppenhaltigen Polydimethylsiloxanes mit 33 % Methylhydrogensiloxyeinheiten und einer Viskosität von 20 mpa.s. Zusätzlich werden 0,025 Teile Triallylcyanurat zur Mischung gegeben. Die Mischung wird in 3 Teile geteilt. Ein Teil wird bei Raumtemperatur gelagert und nach 24 Stunden, 3 Tagen und 7 Tagen das Replastizierverhalten auf dem Zweiwalzenstuhl jeweils überprüft. Das Replastizierverhalten ist nach einem Tag deutlich schlechter, als man es von handelsüblichen, mit Peroxid vernetzenden Siliconkautschuk-Mischungen gewohnt ist, nach 3 Tagen ist eine deutliche Verstrammung festzustellen, und nach 7 Tagen ist die Mischung bis zur Unverarbeitbarkeit verhärtet. Der zweite Teil der Mischung wird der Vulkametrie unterzogen gemäß Beispiel 2.

Der dritte Teil wird gemäß Beispiel 2 zu Prüfplatten vernetzt.

**Beispiel 4**

Zu der in Beispiel 2 vorbeschriebenen Grundmischung aus 143 Teilen Vormischung und 1,5 Teilen Si-H-Öl werden 0,025 Teile Triallylcyanurat und 0,25 Teile Bis-2,4-[Dichlorbenzoyl]peroxid als fünfzigprozentige Paste in Siliconöl zugegeben. Die Mischung wird in drei Teile geteilt.

Ein Teil wird bei Raumtemperatur bis zu 3 Wochen gelagert, wobei das Replastizierverhalten auf dem Zweiwalzenstuhl ausgezeichnet bleibt.

Mit dem zweiten und dritten Teil wird verfahren wie in den vorhergehenden Beispielen beschrieben.

**Beispiel 5**

Zu der in Beispiel 2 vorbeschriebenen Grundmischung aus 143 Teilen Vormischung und 1,5 Teilen Si-H-Öl werden 0,25 Teile Bis-[2,4-Dichlorbenzoyl]peroxid als fünfzigprozentige Paste in Siliconöl zugegeben und die Mischung in drei Teile geteilt. Ein Teil wird bei Raumtemperatur 24 Stunden gelagert. Nach dieser Zeit war die Michung bis zur Unverarbeitbarkeit verhärtet.

Der zweite Teil der Mischung wird der Vulkametrie unterzogen gemäß Beispiel 2.
Der dritte Teil wird gemäß Beispiel 2 zu Prüfplatten vernetzt.

**Beispiel 6**

Es wird auf einem Gummimischwerk in Analogie zu Beispiel 1, jedoch unter Weglassung der 10 ppm Platin in Form des Tetravinyl-tetramenhylcyclotetrasiloxan-Platin-Komplexes, eine Vormischung hergestellt. Zu 143 Teilen dieser Grundmischung werden aug einem Zweiwalzwnstuhl bei 20° 1,5 Teile des bereits beschriebenen Si-H-Öles sowie 0,25 Teile Bis-[2,4-Dichlorbenzoyl]peroxid als fünfzigprozentige Paste in Siliconöl zugemischt.
Die erhaltene Mischung wird in 3 Teile geteilt und davon ein Teil bei Raumtemperatur bis zu 3 Wochen gelagert. Nach dieser Zeit war die Viskosität der Mischung gegenüber der Anfangsviskosität unverändert.
Der zweite Teil der Mischung wurde gemäß Beispiel 2 der Vulkametrie unterzogen. Beim Versuch der Prüfplattenherstellung vernetzt der dritte Teil der Mischung so unvollständig, daß von einem Elastomer nicht gesprochen werden kann.

**Beispiel 7**

Zu der in Beispiel 2 vorbeschriebenen Grundmischung aus 145 Teilen Vormischung und 1,5 Teilen Si-H-Öl werden 0,1 Teile Triallylcitrat zugemischt.
Die Mischung wird in 3 Teile geteilt. Ein Teil wird bei Raumtemperatur gelagert. Bereits nach 24 Stunden Lagerzeit ist die Mischung bis zur Unverarbeitbarkeit verhärtet.
Der zweite Teil der Mischung wird der Vulkametrie gemäß Beispiel 2 unterzogen.
Der dritte Teil wird gemäß Beispiel 2 zu Prüfplatten vernetzt.

**Beispiel 8**

Zu der in Beispiel 2 vorbeschriebenen Grundmischung aus 143 Teilen Vormischung und 1,5 Teilen Si-H-Öl werden 0,1 Teile Triallylcitrat sowie 0,25 Teile Bis-[2,4-Dichlorbenzoyl]peroxid als fünfzigprozentige Paste in Siliconöl zugemischt. Die Mischung wird in 3 Teile geteilt. Ein Teil wird bei Raumtemperatur gelagert und nach 24 Stunden, 3 Tagen und 7 Tagen das Replastizierverhalten auf dem Zweiwalzenstuhl jeweils überprüft. Nach 24 Stunden Lagerdauer war die Mischung nur leicht verstrammt, und nach 3 Tagen deutlich verstrammt. Die Grenze der Verarbeitbarkeit ist nach 7 Tagen Lagerdauer erreicht.
Der zweite Teil der Mischung wird der Vulkametrie gemäß Beispiel 2 unterzogen.
Der dritte Teil wird gemäß Beispiel 2 zu Prüfplatten vernetzt.

**Beispiel 9**

Zu 143 Teilen der Grundmischung des Beispiels 2 werden 1,5 Teile des beschriebenen Si-H-Öles, 1,0 Teile N,N'-Bis-(trimethylsilyl)harnstoff und 0,25 Teile Bis-[2,4-Dichlorbenzoyl]peroxid als fünfzigprozentige Paste in Siliconöl zugegeben. Die Mischung wird in drei Teile geteilt. Ein Teil wird bei Raumtemperatur bis zu 3 Wochen gelagert, wobei das Replastizierverhalten ausgezeichnet bleibt.
Der zweite Teil der Mischung wird der Vulkametrie unterzogen gemäß Beispiel 2.
Der dritte Teil wird gemäß Beispiel 2 zu Prüfplatten vernetzt.

**Beispiel 10**

Zu 143 Teilen der Grundmischung nach Beispiel 2 werden 1,5 Teile des Si-H-Öles mit 33 % Methyl-hydrogen-siloxygruppen und 0,5 Teile Bis-(2,4-Dichlorbenzoyl)peroxid als fünfzigprozentige Paste in Siliconöl zugemischt. Nach 21 Tagen Lagerung bei Raumtemperatur ist die Mischung immer noch ausgezeichnet replastizierbar.

**Beispiel 11**

Auf einem Gummimischwerk wird eine Siliconkautschuk-Vormischung hergestellt, indem man in der üblichen Weise zu 100 Teilen eines vinylgruppenahltigen Polydimethylsiloxans mit 0,175 % Vinylgruppen, gerechnet als Vinylmethylsiloxyeinheiten, 39 Teile einer pyrogen erzeugten Kieselsäure mit einer Oberfläche von 200 $m^2/g$, 5,4 Teile eines Verarbeitungshilfsmittels vom Typ der vinylgruppenhaltigen, hydroxylgruppenterminierten Polydimethylsiloxane mit 5 % Vinylgehalt, gerechnet als Vinylmethylsiloxyeinheit sowie 0,5 Teile Hexamethyldisilazan und 1,5 Teile des Si-H-Öles mit 33 % Methyl-hydrogen-siloxygruppen miteinander vermischt. Zu dieser Grundmischung werden bei Raumtemperatur 0,1 Teile N,N'-Bis-(trimethylsilyl)harnstoff und 0,25 Teile Bis-(2,4-Dichlorbenzoyl)peroxid als fünfzigprozentige Paste in Siliconöl sowie 1 Teil einer 0,01 % Platin enthaltenden Anpastung der in Beispiel 1 erwähnten Platinverbindung in Siliconkautschuk gemischt. Die Misschung wird in 3 Teile geteilt. Ein Teil wird bei Raumtemperatur bis zu 3 Wochen gelagert, wobei das Replastizierverhalten gut bleibt. Der zweite Teil der Mischung wird der Vulkametrie unterzogen gemäß Beispiel 2. Der dritte Teil wird gemäß Beispiel 2 zu Prüfplatten vernetzt.

**Beispiel 12**

Zur Grundmischung nach Beispiel 11 werden bei Raumtemperatur lediglich 0,5 Teile Bis-(2,4-Dichlorbenzoyl)peroxid als fünfzigprozentige Paste in Siliconöl zugesetzt.

Die Mischung ist nach 7tägiger Lagerung bei Raumtemperatur noch gut replastizierbar und nach 21 Tagen an der Grenze der Verarbeitbarkeit angelangt.

Die erfindungswesentlichen Eigenschaften der Beispiele 2 bis 12 sind in Tabelle 1 zusammengefaßt. Das Beispiel 6 vernetzt nur unzureichend und ergibt kein brauchbares Elastomer. Die Beispiele 2, 5 und 7 vernetzen bereits bei Raumtemperatur in so kurzer Zeit, daß sie nicht als handhabungssicher bezeichnet werden können.

Die Replastizierzeit wird gemessen in Minuten auf einem Laborwalzwerk von 75 mm Walzendurchmesser und 120 mm Backenabstand bei einer Temperatur von 23°C und 20 Upm. Die Aufgabemenge betrug jeweils 70 g. Die Eigenschaften der vernetzten Elastomere (Vulkanisate) wurden bestimmt nach DIN 53 505 (H), DIN 53 504 (F, D) und ISO 4662 (E). Die Vulkameteruntersuchungen wurden in Anlehnung an DIN 53 529, aber unter Einhaltung eines zeitlinearen Temperaturprogramms mit 5°/min von 50 bis 200°C durchgeführt. $T_{10}$ bedeutet diejenige Temperatur, bei der die Vernetzung 10 % des Endwertes erreicht hat. Je kleiner $T_{10}$, desto größer ist im allgemeinen die Gefahr der vorzeitigen Anvernetzung bei Lagerung und Verarbeitung der Mischung.

**Tabelle 1**

| Beispiel Nr. | Vulkameter | Replastizierzeit min nach RT — Lagerung | | | Eigenschaften der Vulkanisate | | | |
|---|---|---|---|---|---|---|---|---|
| | $T_{10}$°C | 3 d | 7 d | 21 d | H | F | D | E |
| 2 | 58 | über7 | über 7 | über 7 | 56 | 8,2 | 400 | 41 |
| 3 | 125 | 1 | 3 | über 7 | 54 | 7,3 | 385 | 38 |
| 4 | 120 | 0,1 | 0,2 | 0,3 | 54 | 9 | 455 | 36 |
| 5 | 95 | über 7 | | | 50 | 6 | 325 | 35 |
| 6 | 115 | 0,1 | 0,1 | 0,1 | 25 | 2,3 | 1 100 | 15 |
| 7 | 80 | über 7 | — | — | 41 | 6,3 | 525 | 27 |
| 8 | 90 | 3 | über 7 | — | 47 | 6 | 420 | 27 |
| 9 | 115 | 0,2 | 0,2 | 0,3 | 40 | 7,3 | 475 | 28 |
| 10 | 110 | 0,5 | 0,5 | 1 | 51 | 7,6 | 415 | 43 |
| 11 | 115 | 0,6 | 0,75 | 1,5 | 46 | 7,6 | 485 | 33 |
| 12 | 110 | 0,75 | 1 | 2 | 50 | 8,1 | 430 | 39 |

Erkärung der Abkürzungen: H = Härte Shore A
F = Zugfestigkeit MPa
D = Bruchdehnung %
E = Rückprallelastizität %

**Beispiel 13**

In einem mit Schnellrührer ausgestatteten, evakuierbaren Mischgefäß werden bei Raumtemperatur folgende Komponenten miteinander vermischt:
100 Gewichtsteile eines dimethylvinylsiloxygruppenterminierten Polydimethylsiloxans, welches eine mittlere Kettenlänge von 800 Dimethylsiloxyeinheiten aufweist, 7 Gew.-Teile eines wasserstoffhaltigen Siliconöles, bestehend aus 33 % Methylhydrogensiloxyeinheiten und 67 % Dimethylsiloxyeinheiten und 10 ppm Platin in Form einer siliconlöslichen Komplexverbindung mit Tetravinyltetramethylcylatetrasiloxan.
Nach dem Zusammengeben der Komponenten steigt die Viskosität der Mischung innerhalb kurzer Zeit an und in weniger als 5 Stunden ist die Masse zu einem elastischen Gummi vernetzt.
In den folgenden Beispielen wird Bis-(2,4-Dichlorbenzoyl)-peroxid in Form einer fünfzehnprozentigen Dispersion zugegeben in einer Mischung aus 1 Teil trimethylsilylgruppenterminiertem Polydimethylsiloxan mit einer Viskosität von 1000 mpa.s und 2 Teilen eines dimethylvinylgruppenterminierten Polydimethylsiloxans mit einer Viskosität von 10000 mpa.s.

**Beispiel 14**

Zu 107 Teilen einer Mischung aus Siliconpolymer, Si-H-Öl und Platin nach Beispiel 13 werden 0,05 Teile Bis-[2,4-Dichlorbenzoyl]peroxid in Form der vorher beschriebenen Mischung zugegeben.
Nach dem Zusammengeben der Komponenten steigt die Viskosität der Mischung innerhalb kurzer Zeit an und nach 5 Stunde geliert sie.

**Beispiel 15**

Zu 107 Teilen einer Mischung aus Siliconpolymer, Si-H-Öl und Platin nach Beispiel 13 werden 0,1 Teile Triallylcyanurat zugegeben.
Nach dem Zusammengeben der Komponenten steigt die Viskosität der Mischung allmählich an, bis nach 24 Stunden Gelierung eintritt.

**Beispiel 16**

Zu 107 Teilen einer Mischung aus Siliconpolymer, Si-H-Öl und Platin nach Beispiel 13 werden 0,05 Teile Bis-(2,4-Dichlorbenzoyl)peroxid in Form der beschriebenen Mischung und 0,1 Teile Triallylcyanurat zugegeben.
Nach dem Zusammengeben der Komponenten steigt die Viskosität wesentlich langsamer als in den Beispielen 14 und 15 an. Der Zeitpunkt der Gelierung wird bis auf 48 Stunden hinausgezögert.

**Beispiel 17**

Zu 107 Teilen einer Mischung aus Siliconpolymer, Si-H-Öl und Platin nach Beispiel 13 werden 0,25 Teile Bis-(2,4-Dichlorbenzoyl)peroxid in Form der beschriebenen Mischung und 0,1 Teile Triallylcyanurat zugegeben.
Nach dem Zusammengeben der Komponenten wird die Viskosität der Mischung nach einem Tag sowie nach einer, zwei, drei und vier Wochen gemessen. Dabei steigt die Viskosität der Mischung linear an und erreicht nach 4 Wochen den 1,6-fachen Wert der Anfangsviskosität. Die Mischung ist auch nach diesem Zeitraum noch gut verarbeitbar.

**Beispiel 18**

Zu 107 Teilen einer Mischung aus Siliconpolymer und Si-H-Öl gemäß Beispiel 13 werden 5 ppm Platin in der beschriebenen Form, 0,25 Teile Bis-(2,4-Dichlorbenzoyl)peroxid und 0,1 Teile Triallylcyanurat zugegeben.
Nach dem Zusammengeben der Komponenten wird die Viskosität der Mischung nach einem Tag sowie nach einer, zwei, drei und vier Wochen gemessen.
Die Viskosität der Mischung steigt linear an und erreicht nach 4 Wochen den 1,4-fachen Wert der Anfangsviskosität. Die Mischung ist auch nach diesem Zeitraum gut verarbeitbar.

**Beispiel 19**

Zu 107 Teilen einer Mischung aus Siliconpolymer und Si-H-Öl gemäß Beispiel 13 werden 20 ppm Platin, 0,25 Teile Bis-(2,4-Dichlorbenzoyl)peroxid in der beschriebenen Form, und 0,1 Teile Triallylcyanurat zugegeben.

Nach dem Zusammengeben der Komponenten steigt die Viskosität der Mischung langsam an. Die Mischung ist nach 7 Tagen noch verarbeitbar und nach 14 Tagen tritt Gelierung ein.

**Patentansprüche**

1. In der Wärme vulkanisierende Polysiloxankautschukmischungen bestehend aus
a) einem ungesättigte Gruppen aufweisenden Polyorganoailoxan,
b) Si-H-Gruppen-haltigen Verbindungen,
c) Füllstoffen,
d) Additionskatalysatoren sowie gegebenenfalls weiteren Hilfsstoffen bzw. Verarbeitungshilfsmitteln,
dadurch gekennzeichnet, daß diese Mischungen zusätzlich ein Inhibitorsystem e), bestehend aus einem organischen Peroxid und Triallylcyanurat, Triallylcitrat und/oder N,N'-bis-(trimethylsilyl)-harnstoff enthalten.

2. Polysiloxankautschukmischungen gemäß Anspruch 1, dadurch gekennzeichnet, daß als Additionskatalysatoren in Polysiloxanen lösliche Platinverbindungen eingesetzt werden.

3. Verfahren zur Herstellung von in der Wärme vulkanisierenden Polysiloxankautschukmischungen, dadurch gekennzeichnet, daß man ungesättigte Gruppen aufweisende Polyorganosiloxane, Si-H-Gruppen-haltige Verbindungen, Füllstoffe, Additionskatalysatoren sowie gegebenenfalls weitere Hilfs- bzw. Verarbeitungsmittel zusammen mit einem Inhibitorsystem, bestehend aus einem organischen Peroxid und Triallylcyanurat, Triallylcitrat und/oder N,N'-bis-(trimethylsityl)-harnstoff vermischt.

4. Verfahren nach Anspruch 3, dadurch gekennzeichnet, daß man zunächst eine Vormischung herstellt, der anschließend das Inhibitorsystem zugegeben wird.

**Claims**

1. Polysiloxane rubber mixtures which vulcanise under heat and consist of
a) a polyorganosiloxane containing unsaturated groups,
b) compounds containing Si-H groups,
c) fillers,
d) addition catalysts and optionally other auxiliaries or processing aids,
chacacterised in that these mixtures additionally contain an inhibitor system e) consisting of an organic peroxide and triallyl cyanurate, triallyl citrate and/or N,N'bis-(trimethylsilyl)-urea.

2. Polysiloxane rubber mixtures according to Claim 1, characterised in that platinum compounds which are soluble in polysiloxanes are used as the addition catalysts.

3. Process for the production of polysiloxane rubber mixtures which vulcanise under heat, characterised in that polyorganosiloxanes containing unsaturated groups, compounds containing Si-H groups, fillers, addition catalysts and optionally other auxiliaries or processing aids are mixed together with an inhibitor system consisting of an organic peroxide and triallyl cyanurate, triallyl citrate and/or N,N'-bis-(trimethylsilyl)-urea.

4. Process according to Claim 3, characterised in that a pre-mix is first prepared to which the inhibitor system is then added.

**Revendications**

1. Mélanges de caoutchouc de polysiloxane vulcanisant à chaud et comprenant:
a) un polyorganosiloxane comportant des groupes insaturés,
b) des composés contenant des groupes Si-H,
c) des charges,
d) des catalyseurs d'addition, ainsi qu'éventuellement d'autres substances auxiliaires ou d'autres agents auxiliaires de traitement,
caractérisés en ce que ces mélanges contiennent, en outre, un système inhibiteur e) constitué d'un peroxyde organique et de cyanurate de triallyle, de citrate de triallyle et/ou de N,N'-bis-(triméthylsilyl)urée.

2. Mélanges de caoutchouc de polysiloxane selon la revendication 1, caractérisés en ce que, comme catalyseurs d'addition, on utilise des composés de platine solubles dans les polysiloxanes.

3. Procédé de préparation de mélanges de caoutchouc de polysiloxanes vulcanisant à chaud, caractérisé en ce qu'on mélange des polyorganosiloxanes comportant des groupes insaturés, des composés contenant des groupes Si-H, des charges, des catalyseurs d'addition, ainsi qu'éventuellement d'autres substances auxiliaires

ou d'autres agents de traitement conjointement avec un système inhibiteur constitué d'un peroxyde organique et de cyanurate de triallyle, de citrate de triallyle et/ou de N,N'bis-(triméthylsilyl)urée.

4. Procédé selon la revendication 3, caractérisé en ce qu'on prépare tout d'abord un mélange préalable auquel on ajoute ensuite le système inhibiteur.